# EUROPEAN PATENT SPECIFICATION

(11) **EP 2 591 082 B1**
(45) Date of publication and mention of the grant of the patent: **18.11.2020**
(21) Application number: 11729598.0
(22) Date of filing: 23.06.2011
(51) Int. Cl.: C11D 3/37, C11D 3/386, C11D 3/40, C11D 3/42

(54) **COMPOSITIONS COMPRISING OPTICAL BENEFIT AGENTS**
ZUSAMMENSETZUNGEN MIT OPTISCHEN PFLEGEMITTELN
COMPOSITIONS COMPRENANT DES AGENTS APPORTANT UN BÉNÉFICE OPTIQUE

(30) Priority: 08.07.2010 GB 201011511
(43) Date of publication of application: 15.05.2013
(73) Proprietor: Unilever PLC, London, Greater London EC4Y 0DY (GB); Unilever N.V., 3013 AL Rotterdam (NL)
(72) Inventor: CRAVEN, RIchard, Michael, Wirral Merseyside CH63 3JW (GB); PARKER, Andrew, Philip, Wirral Merseyside CH63 3JW (GB)
(74) Representative: Corsten, Michael Allan
(86) International application number: PCT/EP2011/060546
(87) International publication number: WO 2012/004134

(56) References cited:
- EP-A1- 0 688 859
- WO-A1-2009/065770
- GB-A- 2 267 911
- US-A- 5 783 548
- US-A1- 2010 144 579
- US-B1- 6 348 441

## Description

### FIELD OF INVENTION

The present invention relates to liquid or gel compositions comprising particles, and in particular liquid laundry detergent compositions, said particles segregating optical benefit agents from polymers which show a negative interaction with said benefit agents.

### BACKGROUND

Laundry treatment compositions generally contain, in addition to surfactants and optional builders, ingredients which provide a benefit to laundered clothes. Examples of such ingredients include, but are not limited to, perfume, enzymes and various other types of polymer, sunscreen, fluorescer, and shading dye.

These materials are also often the most expensive components of the laundry composition and are known as "benefit agents". It can be advantageous to protect (for example by encapsulation) benefit agents when they are included in formulations due to potential incompatibility with other ingredients in the formulation. This incompatibility can cause the formulation to be unstable, or involve unwanted reactivity of the benefit agent with other formulation components and so cause the efficacy of the benefit agent, or other product properties, to be adversely effected. We have determined that one such negative interaction is that between benefit agents having an optical benefit and polymers present to maintain dyes in solution.

EP 0688859 discloses non-aqueous detergents which comprise both a bleach and a dye transfer inhibition polymer. The bleach may be present in particulate form. Separation of the optical benefit agent and the dye transfer inhibition polymer is not addressed.

US 2010/0144579 discloses compositions having both a dye transfer inhibition polymer and an optical brightener present in the bulk of the formulation.

US 5783548 discloses inhibiting dye transfer compositions comprising a polyamide N-oxde polymer, a brightener and a non-aromatic anionic surfactant.

US 6348441 B1 discloses a liquid laundering composition and method, the composition comprising a non-aqueous liquid phase, a dye transfer inhibiting polymer and optionally a photo bleach and/or a brightener. The dye transfer inhibiting polymer may be in the liquid phase or in the form of particles.

Optical benefit agents include:
a) shading dye: generally blue or violet dyes, present to mask yellowness,
b) fluorescer: adsorb UV light and re-emit the light in the visible spectrum to provide an impression of whiteness,
c) sun-screen: reduce UV damage either to a substrate or to other components of a formulation (such as enzymes), and,
d) photo-bleach: adsorb light and form a species which promotes bleaching reactions.

When a coloured substrate is treated with a surfactant containing formulation, colour may be lost from the substrate and pass into solution. Re-deposition of this colour elsewhere on the substrate leads to unwanted effects, such as loss of colour definition or even dyeing of white or light-coloured substrates. These problems are overcome by the use of a polymer to maintain dyes in solution. Such polymers are known variously "dye transfer inhibitors" (DTI), or DTI polymers.

Optical benefit agents and DTI polymers can be incompatible, as, particularly in a liquid or gel formulation, the DTI polymer complexes the benefit agent which can lead to reduced performance and, in the case of some concentrated aqueous formulations, to precipitation of the DTI-benefit agent complex and even product instability.

### SUMMARY OF INVENTION

We have determined that by segregating one or both of the DTI polymer or the optical benefit agent in water-soluble particles, adverse consequences of interaction between these materials can be reduced.

Accordingly, the present invention provides, a packaged pourable liquid or gel formulation according to claim 1.

By segregating the polymer (b) and the agent (c) such that polymer (b) is in the particles (a) and the other is in the bulk of the formulation, it is possible to avoid some or all of the negative interactions between the dye-transfer inhibiting polymer and the optical benefit agent.

"Pourable liquid" as defined herein refers to a liquid having a viscosity of less than about 2000 mPa.s at 25°C and a shear rate of 20 sec-1. In some embodiments, the viscosity of the pourable liquid may be in the range of from about 200 to about 1000 mPa.s at 25°C at a shear rate of 20 sec-1. In some embodiments, the viscosity of the pourable liquid may be in the range of from about 200 to about 500 mPa.s at 25°C at a shear rate of 20 sec-1.

"Gel" as defined herein refers to a transparent or translucent liquid having a viscosity of greater than about 2000 mPa.s at 25°C and at a shear rate of 20 sec-1. In some embodiments, the viscosity of the gel may be in the range of from about 3000 to about 10,000 mPa.s at 25°C at a shear rate of 20 sec-1 and greater than about 5000 mPa.s at 25°C at a shear rate of 0.1 sec-1.

"Water-soluble", in the content of the present invention, means that the elements forming the particle will dissolve in demineralised water at 25°C, but not dissolve in the liquid or gel formulation.

"Packaged", in the context of the present invention, means that the pourable liquid or gel formulation is stably enclosed within a container for sale and/or transport. Packaged does not include the transient wash-liquors that are formed when products containing a particles are diluted in use (e.g. in a washing machine, bath, bucket or sink).

The DTI polymer (b) is present in the particles (a) and the optical benefit agent (c) is present in the bulk of the formulation.

Preferably the polymer (b) comprises at least one of poly(vinylpyrrolidone), poly(vinylpyridine-N-oxide), and poly(vinylimidazole).

Preferably, the packaging is at least in part transparent. "Transparent" as used in that context means that a formulation, or a package according to the invention preferably has a transmittance of more than 25%, more preferably more than 30%, most preferably more than 40%, optimally more than 50% in the visible part of the spectrum (approx. 410-800 nm). Packaging materials with which this invention may be used include, but are not limited to: polypropylene (PP), polyethylene (PE), polycarbonate (PC), polyamides (PA) and/or polyethylene terephthalate (PETE), polyvinylchloride (PVC); and polystyrene (PS) or multilayer combinations.

Transparency has benefits if the particles are visible, in that the particles can then also provide a visual cue to the user of the composition. Such a cue is advantageous where the formulation is a highly concentrated formulation.

Preferably the formulation comprises an enzyme. Enzymes are known to assist in cleaning as well as having other benefits. Many enzymes have a disadvantage that they are unstable to UV light. Thus in a transparent packaging it has been suggested to incorporate UV absorbers (sunscreens) into the packaging. However, as packaging becomes thinner to save weight and reduce environmental impact it can become difficult to include enough UV adsorber into the packaging, or the inclusion of the adsorber can lead to recycling problems. Putting the UV absorber (sunscreen) in the formulation avoids these difficulties.

Preferably, the average diameter of the particles (a) is in the range 1-10mm, preferably 3-6mm. This provides a good balance between the particles forming a visible cue and uniform dosing. Even more preferably, the particles (a) are sheet-like and have a ratio of the average diameter to thickness greater than 5:1, preferably greater than 8:1. In particular embodiments of the invention, the average thickness of the sheet-like particles (a) is in the range 100-2000 microns, preferably 200-500 microns. As the particles get thicker they become more expensive in formulation terms and less easy to suspend. As the particles become thinner they have less benefit agent carrying capacity and more may be needed to deliver an appropriate level of benefit agent.

A suitable and preferred material for the bulk of the material comprising the particles (a) comprise a hydrophobically modified polymer having a backbone selected from the group consisting of polyvinyl alcohol, polyvinyl acetate, cellulose ethers, polyethylene oxide, starch, polyvinylpyrrolidone, polyacrylamide, polyvinyl methyl ether-maleic anhydride, polymaleic anhydride, styrene maleic anhydride, hydroxyethylcellulose, methylcellulose, polyethylene glycols, carboxy-methylcellulose, polyacrylic acid salts, alginates, acrylamide copolymers, guar gum, casein, ethylene-maleic anhydride resin series, polyethyleneimine, ethyl hydroxyethylcellulose, ethyl methylcellulose, hydroxyethyl methylcellulose and copolymers of the monomers thereof.

Typically, a low viscosity pourable liquid will contain a structuring agent to assist in keeping the particles in suspension. One type of structuring agent which is especially useful in the compositions of the present invention comprises non-polymeric (except for conventional alkoxylation), crystalline hydroxy-functional materials which can form thread-like structuring systems throughout the liquid matrix when they are crystallized within the matrix in situ. Such materials can be generally characterized as crystalline, hydroxyl-containing fatty acids, fatty esters or fatty waxes. Specific examples of preferred crystalline, hydroxyl-containing structurants include castor oil and its derivatives. Examples include mixtures of hydrogenated castor oil and its hydrolysis products, e.g. hydroxy stearic acid. Especially preferred are hydrogenated castor oil derivatives such as hydrogenated castor oil and hydrogenated castor wax. Commercially available, castor oil-based, crystalline, hydroxyl-containing structurants include THIXCIN® from Rheox, Inc. (now Elementis). In the alternative, cellulosic materials can be used.

The packaging may initially contain several doses of the formulation. The invention is also applicable to so-called "unit-dose" formulations which preferably comprise a water-soluble pouch containing a single dose of formulation, but the preferred format of the formulation is one delivered as a plurality of doses of a liquid in a re-closable bottle, multi-dose pouch or other like container.

Preferably the formulation is transparent. By transparent in this context is meant that formulations are such that a sample of "Arial 12 point" printing can be read through a 1 centimetre depth of the formulation (in the absence of the particles). A "lamellar" particle in a transparent formulation and an at least partly transparent container has a higher visual impact as compared to a particle comprising spheres or other three-dimensional solids consisting of the same volume of material.

A particularly preferred embodiment of the invention provides a rigid, at least partially transparent container, which contains a transparent liquid laundry detergent composition, said composition having dispersed therein a plurality of sheet-like elements which are soluble in water but insoluble in the composition.

A preferred surfactant composition is a pourable liquid or gel laundry detergent composition comprising an anionic surfactant, a nonionic surfactant, or a mixture thereof. Such formulations are intended for use in a multi-stage laundry process which comprises a main-wash step and a rinsing step. Depending on the benefit agent being provided, the particles (a) may be designed to dissolve in the early stages of the wash, or may be carried over into the rinse and subsequently dissolve in the rinse.

It is particularly preferred that, for the embodiments as liquid laundry detergent compositions, the dosage in which the composition is applied is such that the wash liquor produced has a surfactant (other than soap) concentration of less than 1 g/L, more preferably less than 0.5 g/L. This is a low level of surfactant as compared with conventional wash liquors. It is also preferred that the dosage of a liquid detergent product containing the cue is less than 30ml and preferably less than 25ml. This is a low dosage as compared with conventional doses of laundry compositions. Such low dosage and/or low surfactant products have environmental advantages in that the products require transport of smaller quantities of material and have a reduced usage of surfactants. However in order to persuade the user that the low dosage of product is effective, it is highly advantageous to include a visual cue comprising lamellar elements as this has a significant visual impact even in a low dosage of product.

### DETAILED DESCRIPTION OF THE INVENTION

All amounts quoted are wt.% of total composition unless otherwise stated.

### Particles:

Preferred particles are made from a material having a polymer backbone which is water-soluble prior to being hydrophobically-modified.

Preferably, the polymer should dissolve in water such that when 0.1g, preferably 0.3g, more preferably 0.5g of polymer is placed into 1L of demineralised water at room temperature and shaken at 100 RPM on a rotator shaker at 20 Celsius for 2 hours, then removed from solution by filtering through a sieve or filter paper of appropriate size and dried, then the weight of the polymer recovered is less than 95% by weight of that added. "Water-soluble", in the context of the particle means that the particle dissolves in the course of the wash or other use.
By 'insoluble' used herein in relation to the modified polymer, it is meant that the polymer (and hence particle formed from it) should not dissolve in the formulation. Suitable polymers are ones which meet the condition that when 1g/L of the modified polymer is placed into an aqueous surfactant mixture (a mixture of linear alkylbenze sulfonate (LAS) and nonionic surfactant (which is a reaction product of aliphatic C₁₂ to C₁₅ primary linear alcohols with ethylene oxide (7 EO)) where the surfactant concentration is greater than 5g/l at room temperature and shaken at 100 RPM on a rotator shaker at 293K for 2 hours, then removed from solution by filtering through a sieve or filter paper of appropriate size and dried, then the weight of the modified polymer recovered is within 95% by weight of that added.

Preferably, the particles (a) are insoluble in an aqueous surfactant mixture (a mixture of linear alkylbenze sulfonate (LAS) and nonionic surfactant (which is a reaction product of aliphatic C₁₂ to C₁₅ primary linear alcohols with ethylene oxide (7 EO)) where the surfactant concentration is from 5 to 800g/l, more preferably greater from 5 to 500g/l, for example 50 to 500g/l.

Lower critical solution temperature (LCST) is a characteristic of a material that demonstrates good solubility in aqueous solutions at low temperatures, but separates from solution when the temperature is raised above the LCST (see Feil et al., Macromolecules 1993, 26, 2496-2500). The 'aqueous solutions' where the LCST effect referred to is shown for polymers of the present invention include water and aqueous surfactant solutions (including aqueous surfactant mixtures). Preferred LCST ranges of the modified polymer are from 5 to 55°C, more preferably from 5 to 50°C. In a preferred embodiment of the invention, the modified polymer has a LCST in water of greater than 20°C, more preferably greater than 30°C.

The particles may comprise a matrix of, for example, a polymer with multiple discrete benefit agent entities embedded in the matrix. The discrete benefit agent entities embedded in the matrix can be the same or different benefit agents. A discrete benefit entity means, for example, a particle comprising encapsulated perfume, or a droplet of softening oil.

The elements preferably comprises a matrix material, preferably a hydrophobically modified polymer (i), and a fabric benefit agent (ii), in a ratio of from 1:50 to 99:1 parts by weight, more preferably from 1:40 to 95:1 parts by weight.

Preferably the polymer has a backbone and side chains comprising hydroxyl groups.

The most preferred backbone for the polymer comprises polyvinyl alcohol, and the polymer preferably has an average molecular weight of from 1,000 to 300,000 Daltons, preferably from 2,000 to 100,000 Daltons.

Polyvinyl alcohol (PVOH) can be supplied in a form comprising a certain amount of polyvinyl acetate (PVAc), in that a level of the hydroxyl groups (OH) of the PVOH material is substituted with acetate groups (OCOCH₃). Hydrolysis of PVAc is a common way to make PVOH. Thus the PVOH used herein generally comprise some PVAc. The PVOH materials (either before or after hydrophobic modification) may comprise from 0.01 to 40% PVAc, preferably from 0.01 to 20%, more preferably from 0.1 to 15%, most preferably 0.5 to 10%, based on the % of the total number of monomers making up the polymer. As used herein, the term PVOH includes PVOH compounds with a PVAc level as previously defined. Particularly preferred materials have a "degree of hydrolysis" of from 85 to 99%.

The preferred polymer is modified to comprise at least one hydrophobic substituent. One preferred method of modification is detailed in example 1. Preferred hydrophobic substituents include those based on parent groups selected from acetals, ketals, esters, fluorinated organic compounds, ethers, alkanes, alkenes and aromatics.

Highly preferred hydrophobic substituents are hydrocarbyl groups of C₄ to C₂₂ carbon chain length. These hydrocarbyl groups may be alkyl or alkenyl based, which can be straight chain, branched or comprise rings; it may also or alternatively incorporate aromatic moieties.

More preferably the hydrocarbyl group has a carbon chain length of from C₄ to C₂₀, even more preferably from C₄ to C₁₅, most preferably from C₄ to C₁₀, for example, from C₄ to C₈.

Hydrocarbyl chain lengths greater than 22 are undesirable as the parent material from which the derivatising group is obtained reacts poorly or not at all with the polymeric backbone. Hydrocarbyl groups shorter than 4 provide negligible additional hydrophobicity.

Especially preferred materials suitable for use to introduce the hydrophobic derivatisation groups onto the polymer are aldehydes such as butyraldehyde, octyl aldehyde, dodecyl aldehyde, 2-ethyl hexanal, cyclohexane carboxy-aldehyde, citral and 4-aminobutyraldehyde dimethyl acetal.

The hydrophobic material is preferably present in the polymer at a level from 0.1 to 40% by weight, based on the total weight of the polymer, more preferably from 2 to 30%, most preferably from 4 to 15%. In practice, with PVOH materials of relatively high degrees of hydrolysis this means that preferred materials will have 5-15% of the -OH groups of the polymer replaced with the hydrophobe.

Where the polymeric backbone is based on polyvinyl alcohol (PVOH), the hydrophobic derivatisation material is preferably present at a level such that the number ratio of the hydrophobic groups to the free hydroxyl pairs on the backbone is from 1:3 to 1:30, more preferably from 1:4 to 1:20, most preferably 1:7 to 1:15.

Additional modifying groups may be present on the polymer backbone. For instance, amines may be preferably included as a modifying group since this makes the polymer more soluble in response to, for instance, the change in pH and/or ionic strength from the wash to the rinse liquor.

A particularly preferred polymer particle comprises a hydrophobic modified polymer of formula: 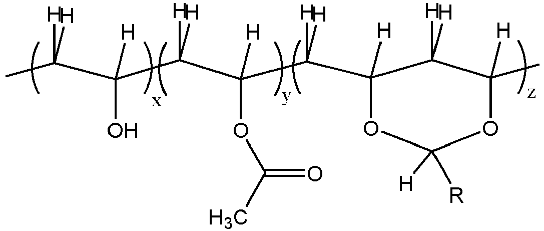 wherein the average number ratio of z to x is within the range of from 1:200 to 1:6, y is in the range of from 0.01 to 20% based on the % of total number of monomers making up the polymer (x + y + z), and R is a hydrophobic group being an alkyl or alkenyl group having from 3 to 21 carbon atoms, preferably from 3 to 6 carbon atoms. Most preferably R is C₃H₇.

### Additional Benefit Agents

Benefit agents in addition to the optical benefit agent and/or the dye-transfer inhibiting polymer are an optional feature of the particles. Preferred additional benefit agents are in the laundry field, for example fabric benefit agents, and benefit agents which provide a benefit to a laundry wash and/or rinse medium. Preferred additional benefit agents include perfumes (both free and encapsulated), enzymes, antifoams, detergency builders, fabric conditioning agents (for example water-insoluble quaternary ammonium materials and/or silicones), antioxidants, reducing agents, sequestrants, density matching polymers, unsaturated oils, emollients and antimicrobial agents.

### Plasticiser and/or Crystallinity Disruptor

The particles preferably incorporate a plasticiser and/or crystallinity disruptor.

It is to be understood that the term "plasticiser" and phrase "crystallinity disruptor" are interchangeable such that a reference to one is an implicit reference to the other.

The plasticiser influences the way the polymer chains react to external factors such as compression and extensional forces, temperature and mechanical shock by controlling the way that the chains distort/realign as a consequence of there intrusions and their propensity to recover to their former state. The key feature of plasticisers is that they are highly compatible with the polymer particles and are normally hydrophilic in nature. The plasticiser will depend on the nature of the polymer making up the particles.

Generally, plasticisers suitable for use with PVOH-based particles have -OH groups in common with the -CH₂-CH(OH)-CH₂-CH(OH)- polymer chain of the polymer particle.

Their mode of functionality is believed to be to introduce short chain hydrogen bonding within the hydroxyl groups and this weakens adjacent-chain interactions, which inhibits swelling of the aggregate polymer mass - the first stage of polymer dissolution.

Water itself is a suitable plasticiser for PVOH polymer particles but other common plasticisers include: polyhydroxy compounds e.g. glycerol, trimethylolpropane, diethylene glycol, triethylene glycol, sorbitol, dipropylene glycol, polyethylene glycol, starches e.g. starch ether, esterified starch, oxidized starch and starches from potato, tapioca and wheat, cellulosics/carbohydrates e.g. amylopectin, dextrin, carboxymethylcellulose and pectin. Amines are particularly preferred plasticisers.

### SURFACTANT COMPOSITIONS

Various preferred surfactants which can be used in formulations according to the invention are listed below. Particularly preferred surfactant-containing formulations are those in the field of home and personal care, especially in the field of laundry, hair and oral care. The fully formulated products preferably comprise from 0.05 to 10 wt.% of the benefit delivery particles, and from 2 to 70 wt.%, more preferably 10 to 30 wt.% of a surfactant selected from an anionic surfactant, a nonionic surfactant, a cationic surfactant, or a mixture thereof. The particles are more preferably present in the surfactant composition at a level of from 0.2 to 10 wt.%, most preferably from 0.2 to 5 wt.%.

### LAUNDRY TREATMENT COMPOSITIONS

The benefit delivery particle is preferably incorporated in a formulation intended for and suitable for use as a laundry treatment composition. Such a formulation will be packaged in a form indicating that it is intended for such use.

The laundry treatment composition may, for example, take the form of an isotropic liquid, or a surfactant-structured liquid.

The laundry treatment composition may be a detergent composition for use in the main wash; alternatively it may be a composition for addition to a rinse cycle, for example a fabric conditioner.

### PROCESS OF PREPARATION

In one embodiment, the invention provides a process, comprising the steps of:
(a) providing an aqueous mixture of a hydrophobically modified polymer as defined herein, and a dye transfer inhibition polymer;
(b) drying the aqueous mixture to remove whole or part of the water from the aqueous mixture to form a sheet;
(c) forming elements from the sheet in the desired shape and/or size; and,
(d) optionally, further drying the elements;
(e) forming a dispersion of the elements in a liquid or gel surfactant-containing composition, which further comprises a dye transfer inhibiting polymer, and;
(f) packaging the said dispersion.

Alternative methods for the incorporation of the benefit agent into the particles may be used. For example, while film manufacturers may be capable of working with perfumes, they are unlikely to have the apparatus needed to put materials such as enzymes into films. Therefore an alternative to incorporating the benefit agent into the film by casting is to locate the benefit agent between two layers of pre-existing film which are then pressed together.

### FLUORESCENT AGENT

The composition comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt.%, more preferably 0.01 to 0.1 wt.%. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2-(4-styryl-3-sulfophenyl)-2H-napthol[1,2-d] triazole, disodium 4,4'-bis{[(4-anilino-6-(N methyl-N-2 hydroxyethyl)amino 1,3,5-triazin-2-yl)]amino}stilbene-2-2'disulfonate, disodium 4,4'-bis{[(4-anilino-6-morpholino-1,3,5-triazin-2-yl)]amino}stilbene-2-2'disulfonate, and disodium 4,4'-bis(2-sulfoslyryl)biphenyl.

The incorporation of the fluorescer into the particle can be used both to protect the fluorescer from unwanted interaction with other components and/or to ensure that there is carry-over of the agent into the rinse to improve deposition.

### SUNSCREEN

Preferred sunscreens include vitamin B3 compounds. Suitable vitamin B3 compounds are selected from niacin, niacinamide, nicotinyl alcohol, or derivatives or salts thereof. Other suitable vitamins include vitamin B6, vitamin C, vitamin A or their precursors. Mixtures of the vitamins can also be employed in the composition of the invention. An especially preferred additional vitamin is vitamin B6. Other non-limiting examples of sunscreens useful herein include adapalene, aloe extract, ammonium lactate, arbutin, azelaic acid, butyl hydroxy anisole, butyl hydroxy toluene, citrate esters, deoxyarbutin, 1,3 diphenyl propane derivatives, 2, 5 di hydroxyl benzoic acid and its derivatives, 2-(4-acetoxyphenyl)-1 ,3 dithane, 2-(4-Hydroxylphenyl)-1,3 dithane, ellagic acid, gluco pyranosyl-1-ascorbate, gluconic acid, glycolic acid, green tea extract, 4-Hydroxy-5-methyl-3[2H]-furanone, hydroquinone, 4 hydroxyanisole and its derivatives, 4-hydroxy benzoic acid derivatives, hydroxycaprylic acid, inositol ascorbate, kojic acid, lactic acid, lemon extract, linoleic acid, magnesium ascorbyl phosphate, 5-octanoyl salicylic acid, 2,4 resorcinol derivatives, 3,5 resorcinol derivatives, salicylic acid, 3,4,5 trihydroxybenzyl derivatives, and mixtures thereof.

Preferred sunscreens useful in the present invention are 2-ethylhexyl-p-methoxycinnamate, butyl methoxy dibenzoylmethane, 2-hydroxy-4-methoxybenzophenone, octyl dimethyl-p-aminobenzoic acid and mixtures thereof. Particularly preferred sunscreen is chosen from 2-ethyl hexyl-p-methoxycinnamate, 4,- t-butyl-4'- methoxydibenzoyl-methane or mixtures thereof.

Other conventional sunscreen agents that are suitable for use include 2-hydroxy-4-methoxybenzophenone, octyldimethyl-p-aminobenzoic acid, digalloyltrioleate, 2,2-dihydroxy-4- methoxybenzophenone, ethyl-4-(bis(hydroxypropyl)) aminobenzoate, 2- ethylhexyl-2- cyano-3,3-diphenyl-acrylate, 2-ethylhexylsalicylate, glyceryl- p-aminobenzoate, 3,3,5- trimethyl-cyclohexylsalicylate, methylanthranilate, p-dimethyl-aminobenzoic acid or aminobenzoate, 2-ethylhexyl-p-dimethyl- amino-benzoate, 2-phenyl-benzimidazole-5- sulfonic acid, 2-(p- dimethylaminophenyl)-5-sulfonic benzoxazoic acid and mixtures of these compounds.

### SURFACTANT

In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981.

Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide.

Non-limiting examples of nonionic detergent compounds include: C₁₂-C₁₈ alkyl ethoxylates, such as, NEODOL® nonionic surfactants from Shell and LUTENSOL® XL and LUTENSOL® XP from BASF; C1O-CI2 alkyl phenol alkoxylates wherein the alkoxylate units are a mixture of ethoxy and propoxy units; C₁₂-C₁₈ alcohol and C₆-C₁₂ alkyl phenol condensates with ethylene oxide/propylene oxide block alkyl polyamine ethoxylates such as PLURONIC® from BASF; C₁₄-C₂₂ mid-chain branched alcohols as discussed in US 6,150,322; C₁₄-C₂₂ mid-chain branched alkyl alkoxylates, BAEX, wherein x is from 1-30, as discussed in US 6,153,577, US 6,020,303 and US 6,093,856.

Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO.

Suitable anionic detergent compounds which may be used are usually water-soluble alkali metal salts of organic carboxylates, sulphates and sulphonates having alkyl radicals containing from about 8 to about 22 carbon atoms, the term alkyl being used to include the alkyl portion of higher acyl radicals. Nonlimiting examples of anionic surfactants useful herein include: C₉-C₁₈ alkyl benzene sulphonates (LAS); C₁₀-C₂₀ primary, branched-chain and random alkyl sulphates (AS); C₁₀-C₁₈ secondary (2,3) alkyl sulphates; C₁₀-C₁₈ alkyl alkoxy sulphates (AEₓS) wherein preferably x is from 1-30; C₁₀-C₁₈ alkyl alkoxy carboxylates preferably comprising 1-5 ethoxy units; mid-chain branched alkyl sulphates as discussed in US 6,020,303 and US 6,060,443; mid-chain branched alkyl alkoxy sulphates as discussed in US 6,008,181 and US 6,020,303; modified alkylbenzene sulphonate (MLAS) as discussed in WO 99/05243, WO 99/05242, and WO 99/05244; methyl ester sulphonate (MES); and alpha-olefin sulfonate (AOS).

The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts greater than 10%, e.g. 25 to 90 wt.% of the surfactant system. Anionic surfactants can be present for example in amounts in the range from about 5 wt.% to about 40 wt.% of the surfactant system.

Methyl ether based surfactants can be used instead of the simple alkyl based surfactants described above.

As noted above, the particles may be insoluble simply by virtue of the presence of surfactant reducing the concentration of water in the formulation to the point where the particle becomes insoluble, or, more preferably, the surfactant may interact with the particle to prevent the elements dissolving.

### CATIONIC FABRIC SOFTENING COMPOUND

The cationic surfactant may be a cationic fabric softening compound. Preferred cationic fabric softening compounds are water insoluble quaternary ammonium material which comprises a compound having two C₁₂₋₁₈ alkyl or alkenyl groups connected to the nitrogen head group via at least one ester link. It is more preferred if the quaternary ammonium material has two or more ester links.

### BUILDERS OR COMPLEXING AGENTS

The composition may optionally comprise from 0 to 50 wt.% of a detergency builder. Preferably builder is present at a level of from 1 to 40 wt.%.

Builder materials may be selected from 1) calcium sequestrant materials, 2) calcium precipitating materials, 3) calcium ion-exchange materials and 4) mixtures thereof.

It is preferred that when an insoluble inorganic builder, e.g., zeolite is used, the size is in the range 0.1 to 10 microns (as measured by The Mastersizer 2000 particle size analyzer using laser diffraction ex Malvern™).

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-50 wt.% of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Preferably the laundry detergent formulation is a non-phosphate built or largely un-built laundry detergent formulation, i.e., contains less than 1 wt.% of phosphate.

For transparent liquid or gel compositions non-particulate, water-soluble builders are preferred. While some insoluble builder may be used excessive use of builder will render the formulation cloudy or even opaque.

### ENZYMES

The composition preferably comprises one or more enzymes which provide cleaning performance and/or fabric care benefits. Examples of suitable enzymes include, but are not limited to, hemicellulases, peroxidases, proteases, cellulases, xylanases, xyloglucanases, lipases, phospholipases, esterases, cutinases, pectinases, mannanases, pectate lyases, keratinases, reductases, oxidases, phenoloxidases,- lipoxygenases, ligninases, pullulanases, tannases, pentosanases, malanases, arabinosidases, hyaluronidase, chondroitinase, laccase, and amylases, or mixtures thereof.

A typical combination is an enzyme cocktail that may comprise, for example, a protease and lipase in conjunction with amylase and/or cellulase. When present in a cleaning composition, the aforementioned enzymes may be present at levels from about 0.00001 wt.% to about 2 wt.%, from about 0.0001 wt.% to about 1 wt.% or even from about 0.001 wt.% to about 0.5 wt.% enzyme protein by weight of the composition.

Preferred enzymes are cellulase, xyloglucanase, lipase, protease and mixtures including one or more of these.

As noted above, enzymes may be incorporated in the particles to prevent unwanted interaction of the enzyme with other formulation components, such as the thickening or structuring system. The cellulose based structuring system will generally have a detrimental interaction with cellulase and potentially xyloglucanase, whereas oil based structuring systems, such as those based on hydrogenated castor oil (HCO) will be sensitive to lipase. Bleaches are in general detrimental to enzyme stability and protease can show negative interactions with other enzymes. A preferred composition according to the present invention is one which:
a) comprises a cellulase and/or xyloglucanase and is free of any cellulosic thickener which is a substrate for the cellulase, and/or,
b) comprises a lipase and is free of any lipid based thickener which is a substrate for the lipase.

### PERFUME

Preferably the composition comprises a perfume. The perfume (excluding any encapsulation material or carrier) is preferably in the range from 0.001 to 3 wt.%, most preferably 0.1 to 2.5wt.% on product. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt.% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and particularly top notes may be used to cue fabric care benefits.

As with other benefit agents, the incorporation of perfume into the particles can be used both to protect the perfume from unwanted interaction with other components and/or loss by evaporation and/or to ensure that there is carry-over of the agent into the rinse to improve deposition.

The particle is a particularly effective way of delivering encapsulated perfumes as the separation of the encapsulated perfume (whether by sedimentation or flotation) is prevented by incorporation of the perfume within the particle. In addition, for encapsulates (or other carriers) which are prone to leakage, incorporation within the elements of a particle assists in retaining the perfume (or other benefit agent) within the encapsulate or other carrier.

Preferred levels of encapsulated perfume in the particle are such that the weight ratio of particle to encapsulate are such that more than 10%wt, preferably more than 25%wt of the particle is the perfume encapsulate.

### POLYMERS

The composition may comprise one or more polymers in addition to any polymer present as the matrix of the elements forming the cue and the DTI polymer.

Examples are carboxymethylcellulose, poly(ethylene glycol), poly(vinyl alcohol), polycarboxylates such as polyacrylates, maleic/acrylic acid copolymers and lauryl methacrylate/ acrylic acid copolymers.

### HYDROTROPE

For compositions in the form of a liquid, it is useful to include a hydrotrope, which prevents liquid crystal formation. Advantageously, the addition of the hydrotrope improves the clarity/transparency of the composition and assists in the perception of the particles.

Suitable hydrotropes include but are not limited to propylene glycol, ethanol, urea, salts of benzene sulphonate, toluene sulphonate, xylene sulphonate or cumene sulphonate. Suitable salts include but are not limited to sodium, potassium, ammonium, monoethanolamine, triethanolamine. Preferably, the hydrotrope is selected from the group consisting of propylene glycol, xylene sulfonate, ethanol, and urea to provide optimum performance. The amount of the hydrotrope is generally in the range of from 0 to 30%, preferably from 0.5 to 30%, more preferably from 0.5 to 30%, most preferably from 1 to 15%.

### BLEACH PRECURSORS

Bleach precursors (e.g. tetra-acetylene diamine and sodium percarbonate) cannot be added directly to a liquid formulation as the resulting peracid species would not be stable. If the laundry treatment composition takes a liquid form, then it is generally preferred that the composition does not contain a peroxygen bleach, e.g., sodium percarbonate, sodium perborate, and peracid.

By encapsulating precursors within particles the generation of peracid can be prevented until the composition is introduced into the main wash.

### FULLY FORMULATED PRODUCTS

A particularly preferred embodiment of the invention comprises a packaged, surfactant-containing formulation comprising a water-soluble visual cue, wherein:
a) the surfactant-containing composition is a pourable, liquid, detergent composition; comprising:
   i) from 0.05 to 10 wt.% of elements forming a visual cue,
   ii) from 2 to 70 wt.%, preferably 10 to 30 wt.% of a surfactant selected from an anionic surfactant, a nonionic surfactant, a cationic surfactant, or a mixture thereof, and,
   iii) an optical benefit agent being a fluorescer;
b) the package is at least in part transparent;
c) the visual cue comprises a plurality of sheet-like elements of dispersed material, wherein:
   i) the ratio of the average diameter of the elements, measured flat, to the thickness of the elements is greater than 5:1, preferably greater than 8:1;
   ii) the average diameter of the elements is in the range 1-10mm, preferably 3-6mm;
   iii) the average thickness of the elements is in the range 100-2000 microns, preferably 200-500 microns; and;
   iv) the elements of the visual cue comprise a dye transfer inhibiting polymer.

Preferred elements are of a uniform appearance rather than being randomly formed from a larger sheet. Several populations of elements may however be present with differing characteristics of appearance such as shape and/or colour. It is preferable that there are fewer than ten, and more preferably less than five such populations present.

A preferred shape of the elements is one which is rotationally symmetrical through at least one twelfth of a rotation about an axis along the thin dimension of the cue. The symmetry is preferably such that the cue is symmetrical after a rotation though one sixth or one fifth of a rotation. Particularly preferred shapes include flower-like shapes and stars with four, five or six points. These preferred shapes assist in improving the visibility and/or the filtration of the cue. An alternative is that the cue is formed from disks or rings, or are quadrilaterals (such as rhombi). One cues may be formed from elements which have bilateral symmetry (such as cardioids and similar shapes). Specific populations of regular shapes rather than random shapes are a more positive indicator that the cue is intended to have some specific function.

Particularly preferred cues are selected such that the elements are also indicia found on flags (such as leafs, stars or crescents) and the colour of the cues and the bulk formulation can be selected to reflect this. Therefore cues may be white or yellow stars in a blue product.

Surprisingly, when the lamellar elements are present in a product containing a visibly coloured dye, it produces an optical illusion that the product is less intensely coloured than is perceived when the cue is absent. This is an unexplained and unpredicted effect, but has the advantage that the dye which is typically present in surfactant-containing products to mask any off-colour of the base formulation, or dyes present as fabric shading agents, appears less intense. In order that the invention may be further and better understood it will be described below with reference to particular examples.

### REFERENCE EXAMPLES:

### Example 1a: Preparation of the Hydrophobically Modified Polymeric Material:

A 10wt% solution of polyvinyl alcohol (PVOH) in water was prepared by placing 100g PVOH (Mowiol 20-98 (trade name), ex Kuraray Specialities) and 900g demineralised water into a flask and heating to 70°C. To this, 10ml of hydrochloric acid (36% aqueous solution) was added to catalyse the reaction and then butyraldehyde was added. The mixture was then stirred at 70°C for 5 hours under an inert atmosphere, after which time the heating was stopped and agitation continued for a further 20 hours at room temperature. The reaction mixture was then brought to a pH of 7 using a sodium hydroxide solution.

The resulting solution was precipitated into acetone to yield the acetalised PVOH polymer and washed repeatedly with acetone (500ml) and then water (50ml). It was then dried under vacuum at 70°C overnight to yield a white polymer.

### Example 2: Preparation of Cue Elements:

Two films were prepared as follows:
Film 1: 18.64g 15% hydrophobically modified polyvinyl alcohol solution, 6.40g Sokalan HP66K (vinylpyrrolidone/vinyl imidazole copolymer ex BASF), 50g demineralised water.
Film 2: 30.04g 15% hydrophobically modified polyvinyl alcohol solution, 0.85g Tinopal CBS-X (fluorescent brightening agent ex. Ciba), 44.11g demineralised water.

In each case, the components were mixed with gently stirring until homogeneous, then left to stand for 24 hours to allow air bubbles to escape. The solutions were then poured into polystyrene trays 25cm x 25cm, placed on a level surface and allowed to dry at 25°C for 72 hours. The sheets were then removed from the trays and small star-shaped cues punched out using a hand punch.

### Example 3: Preparation of Product:

A formulation consisting of 12 x 35g dose was prepared by mixing the liquid base with 0.22g of the cues. This will deliver the requisite dose of dye transfer polymer or fluorescent brightening agent for each dose.

A suitable base liquid formulation comprises 32% water, 36% surfactant (6.87% NI 7EO, 13.11% LAS, 10.23% SLES 3EO, 5.78% FA).

### Example 4: Product Comparisons:

Experimental protocol:
Prewash conditions: woven and knitted cotton monitors and ballast pre washed twice using 77g ECE reference powder (without fluorescer) on 60°C cotton cycle, 26°FH (Prenton water)
Main wash: Tergometer™ pots filled with 1 litre of water then the product added with agitation, the monitors, dye donors and ballast then added and finally film if used. 30 minute agitation, 2 rinses in prenton water, dried overnight.
Monitors used: 10x10cm - 2 per pot/wash
   - Knitted cotton
   - Multi strip (Wool, Acrylic, Polyester, Nylon 6.6, Bleached unmercerised cotton, Secondary cellulose acetate)
Dye monitors used
   - Direct Red 80 (1% on mercerised woven cotton)
   - Direct Blue 71 (1% on mercerised woven cotton)
   - Direct Green 26 (1.5% on mercerised woven cotton)
   - Direct Black 22 (5% on woven cotton poplin)
   - Direct Blue 85 (0.2% on woven cotton poplin)
Products
   - Base (control: no HP66K/CBS-X)
   - Base with mPVOH/HP66K (polymer in visual cue)
   - Base with mPVOH/CBS-X (fluorescer in visual cue)
   - Base with CBS-X + HP66K (fully formulated, both materials in bulk)
   - Base structured with hydrogenated castor oil (HCO) with CBS-X + HP66K (fully formulated, both materials in bulk)

Results - delta E (columns are: average, std. devn, 95% confidence, ranking). Higher values of delta E are worse, showing dye transfer. Embodiments are in bold.

**On woven cotton:**

| | | | | |
|---|---|---|---|---|
| Base (control) | 8.46 | 0.66 | 0.53 | 5 |
| **Base +HP66K in mPvOH particle** | **2.25** | **0.53** | **0.43** | **1** |
| **Base +CBS-X in mPvOH particle** | **2.92** | **0.20** | **0.16** | **=2** |
| Base + HP66K + CBS-X (unstable) | 6.21 | 0.77 | 0.61 | 4 |
| Base + HP66K + CBS-X + HCO | 2.93 | 0.52 | 0.41 | =2 |

**On knitted cotton:**

| | | | | |
|---|---|---|---|---|
| Base (control) | 12.85 | 1.72 | 1.37 | 5 |
| **Base +HP66K in mPvOH particle** | **3.77** | **0.85** | **0.68** | **1** |
| **Base +CBS-X in mPvOH particle** | **5.02** | **0.37** | **0.30** | **3** |
| Base + HP66K + CBS-X (unstable) | 10.27 | 1.47 | 1.17 | 4 |
| Base + HP66K + CBS-X + HCO | 4.74 | 0.53 | 0.42 | 2 |

On both types of cloth, the addition of PVP from a modified PVOH cue is better than all other routes. The next best routes are to deliver CBS-X from the mPVOH cue or to use a HCO structured liquid.

The worst routes are to have the PVP/VI and CBS-X both in the formulation or to have no PVP/VI and CBS-X at all.

While the HCO route may seem to be a viable alternative to the present invention, it presents problems in the presence of many lipase variants as these will rapidly break-down the structuring agent on storage.

## Claims

1. A packaged liquid or gel formulation comprising
(a) water-soluble particles,
(b) a dye-transfer inhibiting polymer, and,
(c) an optical benefit agent,
Wherein,
i) optical benefit agent (c) and dye-transfer inhibiting polymer (b) are spatially segregated, and,
ii) polymer (b) is present in particles (a) and agent (c) is present in the bulk of the formulation, and,
iii) optical benefit agent (c) is fluorescer.

2. A packaged formulation according according to claim 1 wherein the polymer (b) comprises at least one of poly(vinylpyrrolidone), poly(vinylpyridine-N-oxide), and poly(vinylimidazole).

3. A packaged formulation according to any preceding claim wherein the packaging is at least in part transparent.

4. A packaged formulation according to any preceding claim comprising an enzyme.

5. A packaged formulation according to any preceding claim wherein the average diameter of the particles (a) is in the range 1-10mm, preferably 3-6mm.

6. A packaged formulation according to any preceding claim wherein the particles (a) are sheet-like and have a ratio of the average diameter to thickness greater than 5:1, preferably greater than 8:1.

7. A packaged formulation according to claim 6 wherein the average thickness of the sheet-like particles (a) is in the range 100-2000 microns, preferably 200-500 microns.

8. A packaged formulation according to any preceding claim, wherein the particles (a) comprise a hydrophobically modified polymer having a backbone selected from the group consisting of polyvinyl alcohol, polyvinyl acetate, cellulose ethers, polyethylene oxide, starch, polyvinylpyrrolidone, polyacrylamide, polyvinyl methyl ether-maleic anhydride, polymaleic anhydride, styrene maleic anhydride, hydroxyethylcellulose, methylcellulose, polyethylene glycols, carboxy-methylcellulose, polyacrylic acid salts, alginates, acrylamide copolymers, guar gum, casein, ethylene-maleic anhydride resin series, polyethyleneimine, ethyl hydroxyethylcellulose, ethyl methylcellulose, hydroxyethyl methylcellulose and copolymers of the monomers thereof.

9. A packaged formulation according to any preceding claim which:
a) comprises a cellulase and is free of any cellulosic thickener which is a substrate for the cellulase, and/or,
b) comprises a lipase and is free of any lipid based thickener which is a substrate for the lipase.

## Patentansprüche

1. Verpackte flüssige oder Gelformulierung, umfassend:
(a) wasserlösliche Partikel,
(b) ein die Farbübertragung inhibierendes Polymer und
(c) ein optisches Vorteilsmittel,
wobei
i) optisches Vorteilsmittel (c) und die Farbübertragung inhibierendes Polymer (b) räumlich getrennt sind und
ii) Polymer (b) in Partikeln (a) vorhanden ist und Mittel (c) in der Masse der Formulierung vorhanden ist und
iii) das optische Vorteilsmittel (c) ein Fluoreszenzmittel ist.

2. Verpackte Formulierung nach Anspruch 1, wobei Polymer (b) mindestens eines von Poly(vinylpyrrolidon), Poly(vinylpyridin-N-oxid) und Poly(vinylimidazol) umfasst.

3. Verpackte Formulierung nach irgendeinem vorhergehenden Anspruch, wobei die Verpackung zumindest teilweise transparent ist.

4. Verpackte Formulierung nach irgendeinem vorhergehenden Anspruch, umfassend ein Enzym.

5. Verpackte Formulierung nach irgendeinem vorhergehenden Anspruch, wobei der durchschnittliche Durchmesser der Teilchen (a) im Bereich von 1 - 10 mm, bevorzugt 3 - 6 mm, liegt.

6. Verpackte Formulierung nach irgendeinem vorhergehenden Anspruch, wobei die Partikel (a) blattförmig sind und ein Verhältnis des durchschnittlichen Durchmessers zur Dicke von größer als 5:1, bevorzugt größer als 8:1, aufweisen.

7. Verpackte Formulierung nach Anspruch 6, wobei die durchschnittliche Dicke der blattförmigen Teilchen (a) im Bereich von 100 - 2000 Mikron, bevorzugt 200 - 500 Mikron, liegt.

8. Verpackte Formulierung nach irgendeinem vorhergehenden Anspruch, wobei die Partikel (a) ein hydrophob modifiziertes Polymer mit einem Gerüst ausgewählt aus der Gruppe bestehend aus Polyvinylalkohol, Polyvinylacetat, Celluloseethern, Polyethylenoxid, Stärke, Polyvinylpyrrolidon, Polyacrylamid, Polyvinylmethylether-Maleinsäureanhydrid, Polymaleinsäureanhydrid, Styrol-Maleinsäureanhydrid, Hydroxyethylcellulose, Methylcellulose, Polyethylenglycolen, Carboxymethylcellulose, Polyacrylsäuresalzen, Alginaten, Acrylamidcopolymeren, Guargummi, Casein, Ethylen-Maleinsäureanhydrid-Harztypen, Polyethylenimin, Ethylhydroxyethylcellulose, Ethylmethylcellulose, Hydroxyethylmethylcellulose und Copolymeren der Monomere davon umfassen.

9. Verpackte Formulierung nach irgendeinem vorhergehenden Anspruch, die
a) eine Cellulase umfasst und frei von Cellulose-Verdickungsmittel ist, das ein Substrat für die Cellulase ist, und/oder
b) eine Lipase umfasst und frei von Verdickungsmittel auf Lipidbasis ist, das ein Substrat für die Lipase ist.

## Revendications

1. Formulation de liquide ou gel emballée comprenant
(a) des particules solubles dans l'eau,
(b) un polymère inhibant le transfert de colorant, et,
(c) un agent bénéfique optique,
dans laquelle
i) l'agent bénéfique optique (c) et le polymère inhibant le transfert de colorant (b) sont spatialement séparés, et,
ii) le polymère (b) est présent dans les particules (a) et l'agent (c) est présent dans le volume de la formulation, et,
iii) l'agent bénéfique optique (c) est un fluorescent.

2. Formulation emballée selon la revendication 1, dans laquelle le polymère (b) comprend au moins un de poly(vinylpyrrolidone), poly(vinylpyridine-N-oxyde) et poly(vinylimidazole).

3. Formulation emballée selon l'une quelconque des revendications précédentes, dans laquelle l'emballage est transparent au moins en partie.

4. Formulation emballée selon l'une quelconque des revendications précédentes comprenant une enzyme.

5. Formulation emballée selon l'une quelconque des revendications précédentes, dans laquelle le diamètre moyen des particules (a) se trouve dans l'intervalle de 1-10 mm, de préférence 3-6 mm.

6. Formulation emballée selon l'une quelconque des revendications précédentes, dans laquelle les particules (a) sont semblables à une feuille et présentent un rapport du diamètre moyen à l'épaisseur supérieur à 5:1, de préférence supérieur à 8:1.

7. Formulation emballée selon la revendication 6, dans laquelle l'épaisseur moyenne des particules en forme de feuille (a) se trouve dans l'intervalle de 100-2 000 microns, de préférence 200-500 microns.

8. Formulation emballée selon l'une quelconque des revendications précédentes, dans laquelle les particules (a) comprennent un polymère hydrophobiquement modifié ayant une structure choisie dans le groupe consistant en poly(alcool vinylique), poly(acétate de vinyle), éthers de cellulose, poly(oxyde d'éthylène), amidon, polyvinylpyrrolidone, polyacrylamide, polyvinylméthyléther-anhydride maléique, poly(anhydride maléique), styrène-anhydride maléique, hydroxyéthylcellulose, méthylcellulose, polyéthylène glycols, carboxy-méthylcellulose, sels de poly(acide acrylique), alginates, copolymères d'acrylamide, gomme guar, caséine, séries de résine d'éthylène-anhydride maléique, polyéthylèneimine, éthylhydroxyéthylcellulose, éthylméthylcellulose, hydroxyéthylméthyl-cellulose, et copolymères des monomères de ceux-ci.

9. Formulation emballée selon l'une quelconque des revendications précédentes qui :
a) comprend une cellulase et est exempte d'épaississant cellulosique qui est un substrat pour la cellulase et/ou,
b) comprend une lipase et est exempte d'épaississant à base de lipide qui est un substrat pour la lipase.
